# EUROPEAN PATENT SPECIFICATION

(11) **EP 3 625 188 B1**
(45) Date of publication and mention of the grant of the patent: **05.07.2023**
(21) Application number: 17727483.4
(22) Date of filing: 15.05.2017
(51) Int. Cl.: C04B 26/04, C04B 26/06, E04B 1/76

(54) **DRY MORTAR FOR AN EXTERNAL WALL INSULATION SYSTEM**
TROCKENMÖRTEL FÜR EIN EXTERNES WANDISOLIERSYSTEM
MORTIER SEC POUR SYSTÈME D'ISOLATION DE PAROI EXTERNE

(43) Date of publication of application: 25.03.2020
(73) Proprietor: Knauf Gips KG, 97346 Iphofen (DE)
(72) Inventor: LICZEWSKI, Bernd, 97318 Repperndorf (DE); SCHÖNEBERGER, Kerstin, 90556 Cadolzburg (DE); ENGERT, Christian, 97350 Mainbernheim (DE); BÖHRINGER, Jürgen, 73105 Dürnau (DE); ARDELEAN, Ioan, 91462 Dachsbach (DE); WEINGART, Thomas, 97262 Hausen OT Sulzwiesen (DE)
(86) International application number: PCT/EP2017/000585
(87) International publication number: WO 2018/210397

(56) References cited:
- DE-A1-102008 043 988
- FR-A1- 2 640 658
- US-A1- 2012 071 588

## Description

The present invention relates to a dry mortar composition for an external wall insulation system (EWIS) and its use.

An external wall insulation system refers to a combination of construction elements to provide the outer surface of a building with a combination of insulation, protection and decoration.

Typically, an insulation material like expanded polystyrene, mineral wool, polyurethane foam or phenolic foam is mounted to a wall; a mesh is applied and finished with an outer layer. This outer layer provides weather protection and decoration. The mesh provides mechanical stability.

For installing this system in a first step a mortar is applied to the board and/or the wall. The board is typically made of either expanded polystyrene (EPS) or a mineral wool. In general, EPS is considered to have a better thermal insulation whereas mineral wool boards provide better fire protection. The mortar is applied on one side of the boards and the boards are pressed onto the wall. A mesh is applied to the board in combination with further mortar. A typical mesh is made of glass fiber.

Finally, one or more layers of a finishing coating are applied. It is possible to apply finally further decorations, for example giving the appearance of bricks or sandstone.

As can be derived from the above, the quality of the mortar is important for the fixing of the boards to the wall and of the mesh. In general, two systems are known. One system is a cementitious binder. The binder is mixed with water on the construction site. It hardens chemically by changing its mineral composition incorporating water. The disadvantage is that these mortars harden over time, so all tools and machineries have to be cleaned thoroughly if a longer break, for example overnight, is made.

As an alternative, there are mortars with organic binders. They harden or rather dry physically by evaporating water and film forming. They are often free of cementitious components, but have to be delivered in ready-to-use form comprising water. Because of the significant amount of water, this mortar adds volume and weight for transport and storage. The benefit of the organic binders is that in a closed system the material does not harden and can, therefore, be left in machines over night.

US 2012/071588 A1 is an example of a paste-like mortar composition for external wall insulation systems.

DE 10 2008 043988 A1 is an example of a dry mortar composition for external wall insulation systems containing one or more hydraulic binders.

It is the object of the present invention to provide a mortar that combines the benefits of both systems, i.e. a dry mortar that does not or at least not significantly harden when mixed with water and kept in a closed system.

The object is solved by a mortar composition comprising (except water):
- 5 to 15 wt% of organic polymer
- 10 to 70 wt% of silicate filler
- 10 to 70 wt% of calcium carbonate
- 5 to 20 wt% aluminum hydroxide
- 0 to 10 wt% of alkali resistant fibers and other additives.
wherein the silicate filler comprises, based on the dry mortar, 20 to 45 wt% particulate material having a particle size above 0.2 mm and the dry mortar composition comprises less than 5 wt% of hydraulic binders and the aluminum hydroxide has a d50 particle size in the range of 2 to 200 µm.

All wt% values in the context of this text refer to the total dry weight of the mortar unless indicated otherwise.

In a preferred embodiment, the dry mortar composition of the present invention comprises less than 1 wt% of hydraulic binders, especially cementitious binders. Preferably the system is free of hydraulic binders.

The organic polymer is for example a dry powder based on vinyl or acryl polymers. The term includes mixtures or copolymers of different materials. In general, organic polymers used in other construction materials in compliance with DIN EN15824 are suitable. A preferred one is a terpolymer of vinyl acetate, vinyl ester and ethylene.

The silicate filler comprises particulate and may comprise powder material. A particulate material is a material that has a particle size above 0.2 mm. The particulate silicate filler is in the range of 20 to 45 wt% of the dry mortar. Typical particulate silicate fillers are sand or quartz. The silicate filler may also comprise powdery materials, i. e. materials smaller than particulate materials. Preferred powdery silicate fillers are fly ash, mica, feldspar, china clay, diatomaceous earth, aluminum silicate, silicic acid derivatives. Preferably, the powdery fillers are contained in a range from 0 to 50 wt%.

A further component is calcium carbonate. Preferred amounts of calcium carbonate are in the range of 20 to 45 wt%. Carbonate is present as a particulate material or as a powder material. A particulate material is a material having a particle size above 0.2 mm. For the particulate material, the particle size d50 is typically in the range of 0.25 to 1.5 mm. The particulate material is preferably in the range of 20 to 45 wt% of the dry mortar.

The particle size d50 defines the particle size at which 50% by weight of all particles are smaller and 50% by weight of all particles are larger.

To distinguish between particulate and powdery fillers, it is sufficient to have a sieve with 0.2 mm mesh width. The part that does not pass the sieve is the particulate material.

Laser scattering is used as the preferred measurement method for particle size.

A further component of the dry mortar composition is aluminum hydroxide, either natural or synthetic. Its particle size d50 is 2 to 200 µm.

Furthermore, the material may comprise a fiber material and other additives. Typically, the fibers are polymeric fibers, cellulose fibers or glass fibers. A suitable fiber length is in the range from about 50 µm up to about 10 mm and the thickness of the fibers is preferably from about 5 µm up to about 1 mm.

In some embodiments, alkali resistant fibers are present. In this case, the range of alkali resistant fibers is preferably from 0.5 to 5 wt%.

Furthermore, the mortar may comprise other additives, for example rheology modifiers, colorants, wetting, defoaming, and/or hydrophobing agents.

A mortar composition is obtainable by mixing the dry mortar composition of the invention with water. The material has preferably a paste-like appearance.

A further embodiment of the invention is the use of the mortar composition for construction purposes, especially for use as part of an external wall insulation system. The external wall insulation may comprise insulation boards and a mesh, wherein the mortar composition of the present invention is applied to the board and the mesh is embedded into the mortar.

The mortar of the present invention may be delivered and stored as a dry material.

It Is combined with water at the construction site. Because it is essentially free of hydraulic binders, it may be left in a closed environment, for example in machinery over night without hardening.

The present invention is further explained by the following, non-limiting examples. Examples 5 and 6 are not according to the invention and are present for illustration purposes only.

### Test procedures

a) Water vapor transmission rate V was measured according to DIN EN ISO 7783: 2012-02, the wet-cup method. Briefly, the material is applied to a porous substrate (polyethylene frit with a porosity of 40 µm) and allowed to dry. The substrate is conditioned according to point 6.2.3 of the DIN standard. After conditioning a cup is partly filled with a saturated ammonium dihydrogen phosphate solution. The porous substrate is sealed to the cup providing 93% relative humidity and the test arrangement is put in a measurement chamber having 50% relative humidity and a temperature of 23 °C.
   Because of the differences in the humidities, there is a water vapor stream through the sample. The mass loss of the measurement cup is determined each 24 h for 7 days and the arithmetic mean of these measurements calculated. The water-vapor transmission rate is calculated from the calculated average mass loss of the measurement cup and the size of the sample surface.
b) Liquid water permeability w was determined according to a DIN EN 1062-03:2008-4. Briefly, a conditioned sample having calcareous sandstone substrate with the size 24 cm × 12 cm × 3 cm (w-value: > 5 kg/(m^{2*}h^{0,5}), surface area = 288 cm² and thickness = 3 cm) with a dried mortar layer is put into 23°C warm water and the weight increase is measured after 24 hours. The test was three times repeated. Liquid water permeability is given in kilogram per square meter and per hour^{0.5} as the arithmetic mean of three samples.
c) Adhesive tensile strength was measured according to DIN EN 1542. Briefly, a sample of dry mortar on a concrete board (300 x 300 x 100 mm) is core hole drilled, the core drill hole having a diameter of 50 mm entering the concrete board about 15 mm deep. A 50 mm die is concentrically fixed onto the cut-out dry mortar surface and the pull-off force that is necessary to break the connection to the concrete board is measured with a pull-off tester. The adhesive tensile strength determined by this test is the mean of at least three individual test values.
d) Fire tests were conducted in accordance with DIN EN 13501-1:2010-1.

### Example 1

A mixture was prepared comprising:
- 10 wt%: organic polymer Vinnapas 7332 C, a redispersible latex powder based on vinyl acetate, ethylene und vinyl ester, commercially available from Wacker Chemie AG, Germany
- 20 wt%: silicate filler Millisil W5 , a quartz powder having a particle size d50 of 50 µm, commercially available from Quarzwerke GmbH, Germany
- 28 wt%: silicate filler quartz sand with a particle size from 0.6 to 1.2 mm commercially available from Quarzwerke GmbH, Germany
- 30 wt%: calcium carbonate filler Omyacarb 50 SV, a calcium carbonate having a particle size d50 of 50 µm, commercially available from Omya International AG, Switzerland
- 10 wt%: aluminum hydroxide Apyral 2E, an aluminum hydroxide having a d50 of 20 µm with about 15 wt% having a particle size larger than 45 µm and a specific surface area (BET) of 0,5 m²/g, commercially available from Nabaltec AG, Schwandorf, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Optigel, a phyllosilicate, commercially available from BYK-Chemie GmbH, Wesel, Germany

The product was mixed in powder form and could be stored and transported.

1 kilo of the dry product was mixed with 0.25 liters of clean water and mixed thoroughly using a kitchenAid^{®} mixer. The paste-like material could be stored for at least 24 h without hardening in a sealed container. The paste-like material was applied to a sample board and allowed to dry. Measurements were made according to the described test procedures a) to d). The following values were achieved:
w according to DIN EN 1062-3:2008-4, w-value=0.26 kg/(m^{2*}h^{0.5}) V according to DIN EN ISO 7783:2012-2, V = 116 g/(m^{2*}d)
Adhesive tensile strength according to DIN EN 1542:1999-07: 0.6 MPa
Fire class according to DIN EN 13501-1:2010-01:A2 s1, d0

### Example 2

A mixture was prepared comprising:
- 12 wt%: organic polymer Elotex FX 330, a redispersible latex powder, based on vinyl acetate, ethylene und vinyl ester, commercially available from Akzo Nobel Chemicals AG, Switzerland
- 5 wt%: silicate filler Dorsilit 2500 , a quartz powder having a particle size d50 of 39 µm, commercially available from Gebrüder Dorfner GmbH & Co. Kaolin- und Kristallquarzsand-Werke GmbH, Germany
- 26 wt%: silicate filler quartz sand with a particle size from 0.6 to 1.2 mm commercially available from Quarzwerke GmbH, Germany
- 40 wt%: calcium carbonate filler Omyacarb 50 SV, a calcium carbonate having a particle size d50 of 50 µm, commercially available from Omya International AG, Switzerland
- 15 wt%: aluminum hydroxide Apyral 2E, an aluminum hydroxide having a d50 of 20 µm with about 15 wt% having a particle size larger than 45 µm and a specific surface area (BET) of 0,5 m²/g, commercially available from Nabaltec AG, Schwandorf, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Bentone, a phyllosilicate, commercially available from Elementis, Köln, Germany

The product was mixed in powder form and could be stored and transported.
1 kilo of the dry product was mixed with 0.25 liters of clean water and mixed thoroughly using a kitchenAid^{®} mixer. The paste-like material could be stored for at least 24 h without hardening in a sealed container. The paste-like material was applied to a sample board and allowed to dry. Measurements were made according to the described test procedures a) to d). The following values were achieved:
w according to DIN EN 1062-3:2008-4, w-value=0.18 kg/(m^{2*}h^{0.5}) V according to DIN EN ISO 7783:2012-2, V = 124 g/(m^{2*}d)
Adhesive tensile strength according to DIN EN 1542:1999-07: 1.1 MPa
Fire class according to DIN EN 13501-1:2010-01:A2 s1, d0

### Example 3

A mixture was prepared comprising:
- 10 wt%: organic polymer DLP 2000 redispersible latex powder, based on vinyl acetate und ethylene commercially available from DOW Anlagegesellschaft mbH, Germany
- 20 wt%: silicate filler Millisil W5 , a quartz powder having a particle size d50 of 50 µm, commercially available from Quarzwerke GmbH, Germany
- 28 wt%: silicate filler quartz sand with a particle size from 0.6 to 1.2 mm commercially available from Quarzwerke GmbH, Germany
- 30 wt%: calcium carbonate filler Omyacarb 50 SV, a calcium carbonate having a particle size d50 of 50 µm, commercially available from Omya International AG, Switzerland
- 10 wt%: Alfrimal 18/40 W an aluminum hydroxide having a d50 of 18 µm and a specific surface area (BET) of 1 m²/g, commercially available from Alpha Calcit Füllstoff GmbH & Co. KG, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Optigel, a phyllosilicate, commercially available from BYK-Chemie GmbH, Wesel, Germany

The product was mixed in powder form and could be stored and transported.

1 kilo of the dry product was mixed with 0.28 liters of clean water and mixed thoroughly using a kitchenAid^{®} mixer. The paste-like material could be stored for at least 24 h without hardening in a sealed container. The paste-like material was applied to a sample board and allowed to dry. Measurements were made according to the described test procedures a) to d). The following values were achieved:
w according to DIN EN 1062-3:2008-4, w-value=0.27 kg/(m^{2*}h^{0.5}) V according to DIN EN ISO 7783:2012-2, V = 120 g/(m^{2*}d)
Adhesive tensile strength according to DIN EN 1542:1999-07: 0.6 MPa
Fire class according to DIN EN 13501-1:2010-01: A2 s1, d0

### Example 4

A mixture was prepared comprising:
- 12 wt%: organic polymer Vinnapas 7055 E, a redispersible latex powder based on vinyl acetate, ethylene und vinyl ester, commercially available from Wacker Chemie AG, Germany
- 5 wt%: silicate filler Millisil W5 , a quartz powder having a particle size d50 of 50 µm, commercially available from Quarzwerke GmbH, Germany
- 26 wt%: silicate filler quartz sand with a particle size from 0.6 to 1.2 mm commercially available from Quarzwerke GmbH, Germany
- 40 wt%: calcium carbonate filler Omyacarb 50 SV, a calcium carbonate having a particle size d50 of 50 µm, commercially available from Omya International AG, Switzerland
- 15 wt%: Alfrimal 18/40 W an aluminum hydroxide having a d50 of 18 µm and a specific surface area (BET) of 1 m²/g, commercially available from Alpha Calcit, Köln, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Optigel, a phyllosilicate, commercially available from BYK-Chemie GmbH, Wesel, Germany

The product was mixed in powder form and could be stored and transported.

1 kilo of the dry product was mixed with 0.28 liters of clean water and mixed thoroughly using a kitchenAid^{®} mixer. The paste-like material could be stored for at least 24 h without hardening. The paste-like material was applied to a sample board and allowed to dry. Measurements were made according to the described test procedures a) to d). The following values were achieved:
w according to DIN EN 1062-3:2008-4, w-value=0.12 kg/(m^{2*}h^{0.5}) V according to DIN EN ISO 7783:2012-2, V =140 g/(m^{2*}d)
Adhesive tensile strength according to DIN EN 1542:1999-07: 1.1 MPa
Fire, class according to DIN EN 13501-1:2010-01:A2 s1, d0

### Example 5

A mixture was prepared comprising:
- 10 wt%: organic polymer Vinnapas 7332 C, a redispersible latex powder based on vinyl acetate, ethylene und vinyl ester, commercially available from Wacker Chemie AG, Germany
- 50 wt%: silicate filler Millisil W5 , a quartz powder having a particle size d50 of 50 µm, commercially available from Quarzwerke GmbH, Germany
- 28 wt%: silicate filler quartz sand with a particle size from 0.6 to 1.2 mm commercially available from Quarzwerke GmbH, Germany
- 10 wt%: aluminum hydroxide Apyral 2E, an aluminum hydroxide having a d50 of 20 µm with about 15 wt% having a particle size larger than 45 µm and a specific surface area (BET) of 0,5 m²/g, commercially available from Nabaltec AG, Schwandorf, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Optigel, a phyllosilicate, commercially available from BYK-Chemie GmbH, Wesel, Germany

The product was mixed in powder form and could be stored and transported.

1 kilo of the dry product was mixed with 0.25 liters of clean water and mixed thoroughly using a kitchenAid^{®} mixer. The paste-like material could be stored for at least 24 h without hardening. The paste-like material was applied to a sample board and allowed to dry. Measurements were made according to the described test procedures a) to d). The following values were achieved:
w according to DIN EN 1062-3:2008-4, w-value=0.32 kg/(m^{2*}h^{0.5}) V according to DIN EN ISO 7783:2012-2, V = 120 g/(m^{2*}d)
Adhesive tensile strength according to DIN EN 1542:1999-07: 0.6 MPa
Fire class according to DIN EN 13501-1:2010-01:A2 s1, d0
Example 5 does not fall within the scope of claim 1.

### Example 6

A mixture was prepared comprising:
- 12 wt%: organic polymer Vinnapas 7055, a redispersible latex powder, based on vinyl acetate, ethylene und vinyl ester, commercially available from Akzo Nobel Chemicals AG, Switzerland
- 41 wt%: calcium carbonate granules Omyapearl, particulate material with a particle size from 0.2 to 1.0 mm commercially available from Omya International AG, Switzerland
- 30 wt%: calcium carbonate filler Omyacarb 50 SV, a calcium carbonate having a particle size d50 of 50 µm, commercially available from Omya International AG, Switzerland

- 15 wt%: aluminum hydroxide Apyral 2E, an aluminum hydroxide having a d50 of 20 µm with about 15 wt% having a particle size larger than 45 µm and a specific surface area (BET) of 0,5 m²/g, commercially available from Nabaltec AG, Schwandorf, Germany
- 1.0 wt%: alkali resistant fibers hm 6,7/2 mm, polyacrylonitrile fibers with a length of 2 mm and a fiber diameter of 30 µm, commercially available from Schwarzwälder Textil-Werke Heinrich Kautzmann GmbH, Germany
- 0.5 wt%: additive Tylose MH, a methylhydroxyethyl cellulose, commercially available from SE Tylose GmbH & Co. KG, Germany
- 0.5 wt%: additive Bentone, a phyllosilicate, commercially available from Elementis, Köln, Germany

The product was mixed in powder form and could be stored and transported. 1 kilo of the dry product was mixed with 0.25 liters of clean water and mixed thoroughly using a kitchenAid^{®} mixer. The paste-like material could be stored for at least 24 h without hardening. The paste-like material was applied to a sample board and allowed to dry. Measurements were made according to the described test procedures a) to d). The following values were achieved:
w according to DIN EN 1062-3:2008-4, w-value=0.21 kg/(m^{2*}h^{0.5}) V according to DIN EN ISO 7783:2012-2, V = 142 g/(m^{2*}d)
Adhesive tensile strength according to DIN EN 1542:1999-07: 1.0 MPa
Fire class according to DIN EN 13501-1:2010-01:A2 s1, d0
Example 6 does not fall within the scope of claim 1.

## Claims

1. Dry mortar composition for an external wall insulation comprising:
- 5 to 15 wt% of organic polymer
- 10 to 70 wt% of silicate filler
- 10 to 70 wt% of calcium carbonate
- 5 to 20 wt% aluminum hydroxide
- 0 to 10 wt% of alkali resistant fibers and other additives, **characterized in that** the silicate filler comprises, based on the dry mortar, 20 to 45 wt% particulate material having a particle size above 0.2 mm, and the dry mortar composition comprises less than 5 wt% of hydraulic binders and the aluminum hydroxide has a d50 particle size in the range of 2 to 200 µm, wherein the particle sizes are determined by sieving or laser scattering.

2. The dry mortar composition of claim 1 comprising less than 1 wt% of hydraulic binders.

3. The dry mortar composition of claim 1, wherein the organic polymer is selected from the group consisting of vinyl and acryl polymers including mixtures and copolymers thereof.

4. The dry mortar composition of any one of the claims 1-3, wherein the silicate fillers further comprise powdery material which is selected from the group consisting of mica, feldspar, china clay, diatomaceous earth, aluminum silicate and silicic acid derivatives.

5. The dry mortar composition of any one of the claims 1-4, wherein the calcium carbonate comprises a particulate material having a particle size above 0.2 mm.

6. The dry mortar composition of any one of the claims 1-5, wherein the fibers are selected from polymeric fibers, glass fibers and cellulose fibers or mixtures thereof.

7. The dry mortar composition of any one of the claims 1-6, wherein the fibers have a fiber length of 1O mm and a thickness of 1 mm.

8. The dry mortar composition of any one of the claims 1-7, wherein the other additives are selected from the group consisting of rheology modifiers, colorants, wetting agents, defoaming agents, and hydrophobing agents.

9. Use of the dry mortar composition of claim 1 mixed with water in an external wall insulation system.

## Patentansprüche

1. Trockenmörtelzusammensetzung für eine Außenwanddämmung, umfassend:
- 5 bis 15 Gew.-% organisches Polymer
- 10 bis 70 Gew.-% Silikatfüllstoff
- 10 bis 70 Gew.-% Calciumcarbonat
- 5 bis 20 Gew.-% Aluminiumhydroxid
- 0 bis 10 Gew.-% alkalibeständige Fasern und andere Zusatzstoffe, **dadurch gekennzeichnet, dass** der Silikatfüllstoff, basierend auf dem Trockenmörtel, 20 bis 45 Gew.-% teilchenförmiges Material, das eine Teilchengröße über 0,2 mm aufweist, umfasst, und wobei die
Trockenmörtelzusammensetzung weniger als 5 Gew.-% an hydraulischem Bindemittel umfasst, und das Aluminiumhydroxid eine d50-Teilchengröße in dem Bereich von 2 bis 200 µm aufweist, wobei die Teilchengrößen durch Sieben oder Laserstreuung bestimmt werden.

2. Trockenmörtelzusammensetzung nach Anspruch 1, umfassend weniger als 1 Gew.-% an hydraulischem Bindemittel.

3. Trockenmörtelzusammensetzung nach Anspruch 1, wobei das organische Polymer aus der Gruppe ausgewählt ist, bestehend aus Vinyl- und Acrylpolymeren, einschließlich Mischungen und Copolymeren davon.

4. Trockenmörtelzusammensetzung nach einem der Ansprüche 1 bis 3, wobei die Silikatfüllstoffe ferner pulverförmiges Material umfassen, das aus der Gruppe ausgewählt ist, bestehend aus Glimmer, Feldspat, Porzellanerde, Diatomeenerde, Aluminiumsilikat und Kieselsäurederivaten.

5. Trockenmörtelzusammensetzung nach einem der Ansprüche 1 bis 4, wobei das Calciumcarbonat ein teilchenförmiges Material, das eine Teilchengröße über 0,2 mm aufweist, umfasst.

6. Trockenmörtelzusammensetzung nach einem der Ansprüche 1 bis 5, wobei die Fasern aus Polymerfasern, Glasfasern und Zellulosefasern oder Mischungen davon ausgewählt sind.

7. Trockenmörtelzusammensetzung nach einem der Ansprüche 1-6, wobei die Fasern eine Faserlänge von 10 mm und eine Dicke von 1 mm aufweisen.

8. Trockenmörtelzusammensetzung nach einem der Ansprüche 1 bis 7, wobei die anderen Zusatzstoffe aus der Gruppe ausgewählt sind, bestehend aus Rheologiemodifikatoren, Farbstoffen, Benetzungsmitteln, Entschäumungsmitteln und Hydrophobierungsmitteln.

9. Verwendung der Trockenmörtelzusammensetzung nach Anspruch 1 gemischt mit Wasser in einem Außenwanddämmungssystem.

## Revendications

1. Composition de mortier sec destinée à l'isolation de paroi externe comprenant :
- 5 à 15 % en poids de polymère organique
- 10 à 70 % en poids de charge à base de silicate
- 10 à 70 % en poids de carbonate de calcium
- 5 à 20 % en poids d'hydroxyde d'aluminium
- 0 à 10 % en poids de fibres résistantes aux alcalis et d'autres additifs, **caractérisée en ce que** la charge de silicate comprend, en fonction du mortier sec, 20 à 45 % en poids de matériau particulaire ayant une taille de particule supérieure à 0,2 mm, et la composition de mortier sec comprend moins de 5 % en poids de liants hydrauliques et l'hydroxyde d'aluminium a une granulométrie d50 dans la plage de 2 à 200 µm, les granulométries étant déterminées par tamisage ou diffusion laser.

2. Composition de mortier sec selon la revendication 1, comprenant moins de 1 % en poids de liants hydrauliques.

3. Composition de mortier sec selon la revendication 1, dans laquelle le polymère organique est choisi dans le groupe constitué de polymères vinyliques et acryliques, y compris leurs mélanges et copolymères.

4. Composition de mortier sec selon l'une quelconque des revendications 1 à 3, dans laquelle les charges de silicate comprennent en outre un matériau pulvérulent qui est choisi dans le groupe constitué de mica, feldspath, kaolin, terre de diatomées, silicate d'aluminium et dérivés d'acide silicique.

5. Composition de mortier sec selon l'une quelconque des revendications 1 à 4, dans laquelle le carbonate de calcium comprend un matériau particulaire ayant une granulométrie supérieure à 0,2 mm.

6. Composition de mortier sec selon l'une quelconque des revendications 1 à 5, dans laquelle les fibres sont choisies parmi les fibres polymères, les fibres de verre et les fibres de cellulose ou leurs mélanges.

7. Composition de mortier sec selon l'une quelconque des revendications 1 à 6, dans laquelle les fibres ont une longueur de fibre de 10 mm et une épaisseur de 1 mm.

8. Composition de mortier sec selon l'une quelconque des revendications 1 à 7, dans laquelle les autres additifs sont choisis dans le groupe constitué de modificateurs de rhéologie, colorants, agents mouillants, agents anti-mousse et agents hydrophobes.

9. Utilisation de la composition de mortier sec selon la revendication 1 mélangée avec de l'eau dans un système d'isolation de paroi externe.
